# EUROPÄISCHE PATENTANMELDUNG

(11) **EP 3 982 461 A1**
(43) Veröffentlichungstag der Anmeldung: **13.04.2022**
(21) Anmeldenummer: 20200974.2
(22) Anmeldetag: 09.10.2020
(51) Int. Cl.: H01M 10/46, H01M 50/247, H01M 50/269, H02J 7/00, H01M 50/256

(54) **MOBILER ENERGIESPEICHER UND VERFAHREN ZUM BETRIEB EINES MOBILEN ENERGIESPEICHERS**

(71) Anmelder: Hilti Aktiengesellschaft, 9494 Schaan (LI)
(72) Erfinder: Holzmeier, Georg, 86748 Marktoffingen (DE)
(74) Vertreter: Hilti Aktiengesellschaft Corporate Intellectual Property

(57) **Zusammenfassung**

Die vorliegende Erfindung betrifft einen mobilen Energiespeicher zur Abgabe von elektrischer Energie. Der mobile Energiespeicher weist insbesondere eine Speichereinheit auf, die modular aufgebaut sein und Speichermodule umfassen kann, wobei der mobile Energiespeicher ferner eine Reihe von Akkuschnittstellen zur Abgabe der elektrischen Energie an Akkumulatoren und/oder Elektrogeräte umfassend Akkumulatoren aufweist. In einem zweiten Aspekt betrifft die Erfindung ein Verfahren zum Betrieb eines mobilen Energiespeichers, wobei die Speichereinheit des mobilen Energiespeichers mit elektrischer Energie aufgeladen werden kann und die Abgabe der elektrischen Energie aus der Speichereinheit an Akkumulatoren und/oder Elektrogeräte, die Akkumulatoren umfassen, mittels mindestens einer Akkuschnittstelle erfolgt.

## Beschreibung

Die vorliegende Erfindung betrifft einen mobilen Energiespeicher zur Abgabe von elektrischer Energie. Der mobile Energiespeicher weist insbesondere eine Speichereinheit auf, die modular aufgebaut sein und Speichermodule umfassen kann, wobei der mobile Energiespeicher ferner eine Reihe von Akkuschnittstellen zur Abgabe der elektrischen Energie an Akkumulatoren und/ oder Elektrogeräte umfassend Akkumulatoren aufweist. In einem zweiten Aspekt betrifft die Erfindung ein Verfahren zum Betrieb eines mobilen Energiespeichers, wobei die Speichereinheit des mobilen Energiespeichers mit elektrischer Energie aufgeladen werden kann und die Abgabe der elektrischen Energie aus der Speichereinheit an Akkumulatoren und/oder Elektrogeräte, die Akkumulatoren umfassen, mittels mindestens einer Akkuschnittstelle erfolgt.

### Hintergrund der Erfindung:

Im Bereich der handbetriebenen Werkzeuggeräte, wie Winkel- oder Trennschleifer, Bohrmaschinen, Bohrschrauber, Bohrhämmer, Schlitzgeräte, Dispenser, Bolzensetzgeräte usw., werden vermehrt Geräte auf den Markt gebracht, die ihre elektrische Energie nicht mehr über einen Netzanschluss beziehen, sondern die ohne Kabelverbindung mit einem Akkumulator ("Akku") als Energieversorgungseinheit betrieben werden können. Diese sogenannten "Akkugeräte" haben den Vorteil, dass keine elektrische Versorgungsleitung an der Arbeitsstelle benötigt wird. Dies ist insbesondere dann von Vorteil, wenn die akkubetriebenen Werkzeuggeräte beispielsweise nicht im häuslichen Umfeld betrieben werden sollen, sondern auf einer Baustelle, die nicht vollumfänglich mit einer Stromversorgung ausgestattet ist. Denn die Akkugeräte können mit Akkumulatoren ausgestattet sein, die den Betrieb des Werkzeuggeräts für eine gewisse Zeit auch ohne bestehende Stromversorgung ermöglichen. Gerade auf großen Baustellen, die noch nicht lange erschlossen sind, oder bei anderen Arbeiten im Freien kann die Bereitstellung einer Stromversorgung mit einem erheblichen Aufwand verbunden sein.

Nachteilig an den bekannten Akkugeräten ist aber, dass insbesondere bei Serienanwendungen oder schweren Arbeiten die mitgeführten Akkus schnell erschöpft sind. Deshalb kann es beispielsweise auf einer Baustelle trotz der Verwendung von Akkugeräten wünschenswert sein, über einen Nachschub an elektrischer Energie zu verfügen, um - beispielsweise während der Arbeit mit einem ersten Akkusatz - einen zweiten Akkusatz aufzuladen, um durchgehend arbeitsfähig zu sein.

Die Aufgabe, die der vorliegenden Erfindung zugrunde liegt, besteht darin, die vorstehend beschriebenen Mängel und Nachteile des Standes der Technik zu überwinden und einen mobilen Energiespeicher bereitzustellen, mit dem eine stabile und bedarfsgerechte Versorgung mit elektrischer Energie an Orten sichergestellt werden kann, die nicht über eine reguläre Stromversorgung bzw. einen Anschluss an das öffentliche Stromnetz verfügen. Dabei kann es sich beispielsweise um eine Baustelle handeln. Der Energiespeicher soll robust und einfach zu transportieren sein, so dass er auch in rauem Gelände leicht und unkompliziert fortbewegt werden kann.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein mobiler Energiespeicher zur Abgabe von elektrischer Energie vorgesehen. Der mobile Energiespeicher ist dadurch gekennzeichnet, dass er ein Fahrwerk zum Transport des mobilen Energiespeichers umfasst, wobei das Fahrwerk mit einer Speichereinheit verbunden ist, wobei die Speichereinheit mit einem Steuerkopf verbunden ist, wobei der Steuerkopf eine Elektronik zur Steuerung der Abgabe der elektrischen Energie umfasst, wobei der mobile Energiespeicher eine Reihe von Akkuschnittstellen zur Abgabe der elektrischen Energie an Ackumulatoren und/oder Elektrogeräte umfassend Akkumulatoren aufweist.

Somit betrifft die Erfindung einen portablen und aufgrund seines Fahrwerks einfach zu transportierenden Batteriespeicher für die Versorgung von akkubetriebenen Elektrowerkzeuge, beispielsweise auf einer Baustelle oder im Freien in größerer Entfernung zu einer erschlossenen Stromversorgung oder einem Stromnetz. Große Batteriespeicher können oft schnell sehr schwer werden. Dieses Problem wird erfindungsgemäß durch das robuste baustellentaugliche Fahrwerk gelöst werden. Mit Hilfe dieses Fahrwerks kann der vorgeschlagene Energiespeicher leicht zur Baustelle transportiert und wieder abtransportiert werden. Das Fahrwerk kann beispielsweise zwei größere Rädern mit einer Achse, sowie zwei kleinere Lenkrollen an der gegenüberliegenden Seite des Energiespeichers umfassen. Mit anderen Worten kann es im Sinne der Erfindung bevorzugt sein, dass das Fahrwerk des mobilen Energiespeichers zwei Räder umfasst, die mit einer Achse verbindbar sind. Ferner kann das Fahrwerk zwei Lenkrollen umfassen, wobei die Lenkrollen bevorzugt einen kleineren Durchmesser als die Räder oder Rollen aufweisen und einen geringeren Abstand zueinander aufweisen als die Räder des Fahrwerks. Außerdem kann das Fahrwerk einen Schubbügel aufweisen, um ein ergonomisches Schieben und Ziehen des mobilen Energiespeichers zu ermöglichen. Um eine geforderte Schiebehöhe beim Schubbügel zu erreichen, kann der Schubbügel beispielsweise ausklappbar oder ausziehbar ausgebildet sein. Für den Transport über Treppen oder zum Herausheben aus einem Kofferraum oder Transporter kann vorzugsweise ein zusätzlicher Handgriff am vorgeschlagenen Energiespeicher vorgesehen sein.

Ein weiterer Vorteil der Erfindung besteht darin, dass die Verwendung von vorgeschlagenen mobilen Speichern von elektrischer Energie den Einsatz von umweltschädlichen, schweren, lauten benzin- oder dieselbetriebenen Stromgeneratoren ersetzen kann. Dadurch kann die Umwelt geschont und die Abgabe von CO2- oder Lärm-Emissionen erheblich reduziert werden.

In einer bevorzugten Ausgestaltung des mobilen Energiespeichers umfasst das Fahrwerk des mobilen Energiespeichers einen Antrieb mit einem Motor, wobei der Motor seine Antriebsenergie aus der Speichereinheit des mobilen Energiespeichers bezieht. Das bedeutet im Sinne der Erfindung bevorzugt, dass der Energiespeicher nicht von einem Nutzer oder Bediener über die Baustelle gezogen oder geschoben werden muss, sondern dass der Nutzer dabei von einem elektrischen Antrieb des vorgeschlagenen mobilen Energiespeichers unterstützt wird. Es ist im Sinne der Erfindung bevorzugt, dass der Energiespeicher bzw. seine bevorzugt elektrisch ausgebildete Antriebseinheit über das Bedienfeld am Steuerkopf des Energiespeichers bedient werden kann. Dort kann zum Beispiel eine Bedienoberfläche oder eine Eingabevorrichtung vorgesehen sein, über die Geschwindigkeiten, Richtungen oder dergleichen eingegeben werden können. Tests haben gezeigt, dass ein elektrischer Antrieb die Verwendung des vorgeschlagenen Energiespeichers und insbesondere seinen Transport auf einer Baustelle wesentlich erleichtern kann.

Darüber hinaus kann der vorgeschlagene mobile Energiespeicher modular aufgebaut sein. Das bedeutet im Sinne der Erfindung bevorzugt, dass die Speichereinheit des Energiespeichers ein oder mehrere Speichermodule umfassen kann. Die Speichereinheit kann somit bedarfsgerecht, d.h. in Abhängigkeit von einem erwarteten Energieverbrauch oder-bedarf, zusammengesetzt sein. Wenn beispielsweise ein hoher Energieverbrauch an einem Arbeitstag auf der Baustelle erwartet wird, kann der mobile Energiespeicher 2, 3, 4 oder 5 Speichermodule umfassen, ohne darauf beschränkt zu sein. Bei einem geringen erwarteten Energiebedarf an einem Arbeitstag auf der Baustelle kann beispielsweise die Speichereinheit bzw. der Energiespeicher nur ein Energiespeichermodul umfassen.

Es ist im Sinne der Erfindung bevorzugt, dass die Speichermodule in einem aufgeladenen Zustand in den vorgeschlagenen mobilen Energiespeicher integriert werden. Dabei ist es bevorzugt, dass die Speichermodule vollständig oder im Wesentlichen vollständig mit elektrischer Energie geladen sind. Es ist im Sinne der Erfindung insbesondere bevorzugt, dass die Speichermodule eine vordefinierte Menge an elektrischer Energie aufnehmen und später wieder abgeben können. Die Speichermodule können daher im Sinne der Erfindung auch als "Normspeichermodule" bezeichnet werden. Der vorgeschlagene mobile Energiespeicher ist somit vorzugsweise nicht nur dazu eingerichtet, elektrische Energie abzugeben, sondern der mobile Energiespeicher ist insbesondere auch dazu eingerichtet, elektrische Energie aufzunehmen und zu speichern. Dadurch, dass die Aufnahme und Abgabe der elektrischen Energie an unterschiedlichen Orten erfolgen kann, ist der vorgeschlagene mobile Energiespeicher optimal für das mobile Arbeiten geeignet.

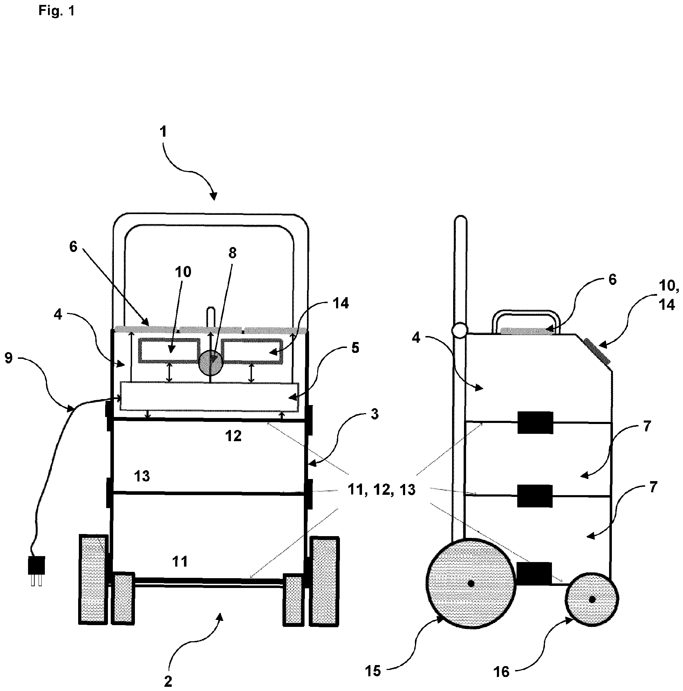

In dem in Fig. 1 dargestellten Ausführungsbeispiel der Erfindung erstrecken sich die einzelnen Speichermodule über die gesamte Fläche des Energiespeichers. Es kann im Sinne der Erfindung aber auch bevorzugt sein, dass beispielsweise 2, 3 oder 4 einzelne Speichermodule die Fläche des Energiespeichers oder eines diese Fläche vollumfänglich ausfüllenden Speichermoduls abdecken. Mit anderen Worten kann jedes Speichermodul von weiteren kleineren Speichermodulen gebildet werden. Während in dem in Fig. 1 dargestellten Ausführungsbeispiel der Erfindung eine horizontale Anordnung der Speichermodule gezeigt wird, kann es im Sinne der Erfindung auch bevorzugt sein, dass die Speichermodule vertikal innerhalb des vorgeschlagenen mobilen Energiespeichers angeordnet vorliegen. Auch eine Mischung aus horizontal und vertikal angeordneten Speichermodulen ist denkbar.

Der mobile Energiespeicher umfasst eine Speichereinheit und einen Steuerkopf, die miteinander eine Einheit bilden. Diese Einheit kann mit dem Fahrwerk verbunden vorliegen, so dass Fahrwerk, Speichereinheit und Steuerkopf zusammen den Energiespeicher bilden. Es ist im Sinne der Erfindung bevorzugt, dass der Steuerkopf auf einer Oberseite der Speichereinheit angeordnet vorliegt. Dabei stellt der Begriff "Oberseite" für den Fachmann im Kontext der vorgeschlagenen Erfindung keinen unklaren Begriff dar, weil der Fachmann erkennt, dass das Fahrwerk des Energiespeichers vorzugsweise an der Unterseite der Speichereinheit angeordnet vorliegt, wobei diese Unterseite dem Erdboden bzw. dem Untergrund zugewandt ist, während die Oberseite der Speichereinheit die der Unterseite gegenüberliegende Seite der Speichereinheit darstellt.

Die Raumrichtung "nach oben" entspricht vorzugsweise einer Bewegung in Richtung beispielsweise des Schubbügels des Energiespeichers (siehe auch: Figur 1), während die Raumrichtung "nach unten" einer Bewegung in Richtung des Untergrunds entspricht.

Es ist im Sinne der Erfindung bevorzugt, dass das Fahrwerk des mobilen Energiespeichers über eine erste Schnittstelle mit der Speichereinheit verbunden ist. Wenn die Speichereinheit aus mehreren Speichermodulen zusammengesetzt ist, liegt vorzugsweise das unterste Speichermodul über die erste Schnittstelle mit dem Fahrwerk verbunden vor. Es ist im Sinne der Erfindung bevorzugt, dass die Speichereinheit des mobilen Energiespeichers über eine zweite Schnittstelle mit dem Steuerkopf verbunden ist. Wenn die Speichereinheit aus mehreren Speichermodulen zusammengesetzt ist, liegt vorzugsweise das oberste Speichermodul über die zweite Schnittstelle mit dem Steuerkopf verbunden vor. Es ist im Sinne der Erfindung bevorzugt, dass zwischen einem untersten Speichermodul und dem Steuerkopf mehrere Speichermodule angeordnet vorliegen können, beispielsweise 1, 2, 3, 4 oder 5 weitere Speichermodule, ohne darauf beschränkt zu sein. Es ist im Sinne der Erfindung bevorzugt, die Speichermodule untereinander mit jeweils einer dritten Schnittstelle verbunden sind.

Die Schnittstellen können insbesondere elektrische und/oder mechanische Schnittstellen sein. Dass bedeutet, dass die Schnittstellen zum einen dafür eingerichtet sein können, eine mechanische Verbindung zwischen den Gegenständen, die sie verbinden, herzustellen. Dabei kann die erste Schnittstelle vorzugsweise dazu eingerichtet sein, eine Verbindung zwischen dem Fahrwerk und der Speichereinheit bzw. einem unteren Speichermodul herzustellen, während die zweite Schnittstelle vorzugsweise dazu eingerichtet ist, eine Verbindung zwischen der Speichereinheit und dem Steuerkopf herzustellen, während die dritte Schnittstelle vorzugsweise dazu eingerichtet ist, eine Verbindung zwischen den Speichermodulen untereinander herzustellen, wenn die Speichereinheit modular aus mehreren Speichermodulen zusammengesetzt ist. Der mechanische Anteil der Schnittstellen sorgt vorzugsweise für einen stabilen und robusten Zusammenhalt zwischen den zu verbindenden Komponenten des Energiespeichers. Der mechanische Schnittstellenanteil kann beispielsweise eine Nut-Feder-Verbindung umfassen, wobei der Zusammenhalt der zu verbindenden Komponenten des Energiespeichers zusätzlich von bevorzugt beidseitig angebrachten Klammern an den Seitenwänden des Energiespeichers verstärkt werden kann. Die Schnittstellen bzw. ihre mechanischen Anteile sorgen vorteilhafterweise für eine definierte mechanische Verbindung zwischen den Komponenten des Energiespeichers, die sich auch unter Baustellenbedingungen als überraschend robust erwiesen hat.

Es ist im Sinne der Erfindung bevorzugt, dass der elektrische Anteil der Schnittstellen eine elektrisch leitende Verbindung zwischen den Bestandteilen des Energiespeichers ermöglicht. Damit kann beispielsweise Strom bzw. elektrische Energie zwischen dem Fahrwerk und der Speichereinheit (erste Schnittstelle), dem Steuerkopf und der Speichereinheit (zweite Schnittstelle) oder zwischen den Speichermodulen der Speichereinheit untereinander (dritte Schnittstelle) ausgetauscht werden. Die Schnittstellen können auch so beschaffen sein, dass ein Datenaustausch über sie möglich ist. Auf diese Weise können Beispielsweise Informationen, Steuerbefehle oder anderen Daten zwischen den Komponenten des Energiespeichers ausgetauscht werden.

Für den modularen Aufbau des Energiespeichers ist es vorteilhaft, geeignete elektrische Schnittstellen zu definieren, welche dazu eingerichtet sind, die beispielsweise gestapelten Speichermodule miteinander und an den oberen und unteren Rändern zum einen mit dem Fahrwerk und zum andern mit dem Steuerkopf zu verbinden. Dabei können diese ersten, zweiten und dritten Schnittstellen zweckmäßigerweise ähnlich oder gleich ausgebildet sein. Es kann aber auch bevorzugt sein, dass die Schnittstellen nicht gleich ausgebildet sind und dadurch unterschiedliche Funktionalitäten aufweisen können. Darüber hinaus leisten die Schnittstellen einen Beitrag zur definierten mechanischen Verbindung zwischen den Speichermodulen, dem Fahrwerk und dem Steuerkopf, wodurch die Einzelteile des modularen Energiespeichersystems sicher zusammengehalten werden. Die mechanische Verbindung kann beispielsweise über eine Nut-Feder-Verbindung erfolgen, die zusätzlich noch durch eine beidseitige Klammer zwei zu verbindende Einzelteile zusammenhält. Oberhalb der Speichermodule kann der Steuerkopf über die gleiche oder eine abweichende mechanische und/oder elektrische Schnittstelle mit den Speichermodulen verbunden sein. Dabei handelt es sich im Sinne der Erfindung vorzugsweise um die zweite Schnittstelle.

Im Steuerkopf ist zum einen bevorzugt eine elektrische Steuerung untergebracht, die im Sinne der Erfindung vorzugsweise auch als "Elektronik" bezeichnet wird. Die Elektronik ist zum einen dazu eingerichtet, das Aufladen der Speichereinheit bzw. der Speichermodule an einem öffentlichen Stromnetz oder einem üblichen Stromanschluss zu steuern bzw. zu ermöglichen. Dafür kann an dem Energiespeicher eine Anschlussleitung angeordnet sein, die beispielsweise ein Netzkabel mit einer Steckverbindung ("Stecker") umfasst. Zum anderen ist die Elektronik dazu eingerichtet, eine Aufladung der Akkumulatoren bzw. der Elektrogeräte, die Akkumulatoren umfassen, zu steuern bzw. zu ermöglichen. Für das Aufladen der Akkus bzw. der Elektrogeräte, die Akkumulatoren umfassen, ist an der Oberseite des Steuerkopfs eine genügend große Anzahl an Ladestationen für die Akkumulatoren vorgesehen. Diese Ladestationen werden im Sinne der Erfindung bevorzugt auch als Akkuschnittstellen bezeichnet. Es handelt sich vorzugsweise um Hohlräume oder zurückgezogen Bereiche im Steuerkopf des vorgeschlagenen Energiespeichers, in die Akkumulatoren oder Teile von Elektrogeräten eingeführt bzw. aufgenommen werden können. Die Ladestationen umfassen vorzugsweise elektrisch Anschlusskontakte, die mit korrespondieren Anschlüssen an den aufzuladenden Akkumulatoren oder Elektrogeräten zusammenwirken, um eine elektrisch leitende Verbindung zwischen Steuerkopf des Energiespeichers und den Akkumulatoren oder Elektrogeräten herzustellen und ein Aufladen der Akkumulatoren oder Elektrogeräten zu ermöglichen. Der Prozess des Aufladens kann von der Elektronik, die vorzugsweise im Steuerkopf des Energiespeichers angeordnet vorliegt, automatisch gestartet und gesteuert werden. Es kann aber ebenso bevorzugt sein, dass der Aufladevorgang manuell von einem Bediener des Energiespeichers gestartet und/oder gesteuert wird. Dazu kann der Nutzer beispielsweise das Bedienfeld am Steuerkopf des Energiespeichers verwenden. Auf einer Anzeigevorrichtung, die am Steuerkopf des Energiespeichers, zweckmäßigerweise neben oder in räumlicher Nähe zu dem Bedienfeld angeordnet vorliegen kann, können dem Nutzer aktuelle Informationen, Daten oder Betriebsparameter des Energiespeichers bzw. seiner Komponenten, sowie der einzelnen Speichermodule angezeigt werden. Es kann im Sinne der Erfindung auch bevorzugt sein, dass auf dem Bedienfeld Informationen, Daten oder Betriebsparameter der aufzuladenden Akkumulatoren oder Elektrogeräte angezeigt werden. Dazu kann während des Aufladevorgangs eine Daten- und/oder Kommunikationsverbindung zwischen den Ackumulatoren und/oder den Elektrogeräten auf der einen Seite und dem Steuerkopf, der dort integrierten Elektronik oder dem Energiespeicher auf der anderen Seite ausgebildet werden. Diese Daten- und/oder Kommunikationsverbindung kann drahtgebunden oder drahtlos ausgestaltet sein. Es ist im Sinne der Erfindung insbesondere bevorzugt, dass die Elektronik des Steuerkopfes zur Steuerung der Abgabe der elektrischen Energie mit den Akkuschnittstellen über eine Kommunikationsverbindung verbunden vorliegt, wobei die Kommunikationsverbindung drahtgebunden oder drahtlos ausgebildet ist.

Es ist im Sinne der Erfindung bevorzugt, dass der mobile Energiespeicher mindestens einen Anschluss für einen Netzstecker eines Elektrogeräts umfasst. Insofern kann der vorgeschlagene mobile Energiespeicher eine Steckdose für ein Elektrogerät bilden und auch zur Stromversorgung von konventionellen Elektrogeräten mit Netzanschluss verwendet werden. Beispielsweise kann an dem mobilen Energiespeicher ein Staubsauger, ein Wassermanagementsystem oder eine Werkzeuggerät angeschlossen werden, um über den Anschluss für das Elektrogerät mit elektrischer Energie versorgt zu werden.

Es ist im Sinne der Erfindung bevorzugt, dass die Speichermodule eine Kapazität von 1 bis 2 Kilowattstunden (kWh) aufweisen. Wenn der mobile Energiespeicher einen Anschluss für einen Netzstecker eines Elektrogeräts umfasst, kann es bevorzugt sein, dass seine Leistungsabgabe im Bereich von 3.600 Watt (W) und 16 Ampère (A) liegt, da die Energieversorgung des Elektrogeräts dadurch analog zu einem Anschluss an das europäische Standard-Stromnetz erfolgen kann.

Es ist im Sinne der Erfindung bevorzugt, dass die Ladestationen des vorgeschlagenen Energiespeichers eine Express-Ladefunktion aufweisen, mit der ein besonders schnelles Aufladen der Akkumulatoren oder der Elektrogeräte ermöglicht wird. Eine solche Schnell-Ladefunktion ist zum einen mit dem zeitlichen Vorteil verbunden, dass das Laden der Akkus besonders schnell erfolgt. Zum anderen ist das vorzugsweise direkte Laden der Geräte-Akkumulatoren über den mobilen Energiespeicher mit dem Vorteil verbunden, dass kein unnötiges Konvertieren von Wechselspannung in Gleichspannung erfolgen muss. Dadurch kann ein überraschend hoher Wirkungsgrad erreicht werden, da nur geringe Energieverluste beim Laden der Akkus auftreten. Es ist im Sinne der Erfindung bevorzugt, dass die Speichermodule eine ähnliche, gleiche oder im Wesentlichen gleiche Voltage aufweisen wie die Akkumulatoren, die mittels der Ladestationen durch den Energiespeicher aufgeladen werden.

Es ist im Sinne der Erfindung bevorzugt, dass der mobile Energiespeicher zur Aufnahme von elektrischer Energie ein Netzkabel zur Verbindung des mobilen Energiespeichers mit einem Energienetz umfasst. Der Eingang des Netzkabels kann beispielsweise im Bereich des Steuerkopfs des mobilen Energiespeichers angeordnet vorliegen. Es kann auch eine direkte, leitende Verbindung mit der Elektronik des mobilen Speichers vorgesehen sein. Eine solche Verbindung ist beispielsweise in Fig. 1 dargestellt. Das Netzkabel kann jedoch auch an allen anderen Stellen in den mobilen Energiespeicher eintreten. Beispielsweise kann das Netzkabel direkt in Verbindung mit der Speichereinheit oder einem Speichermodul stehen. Beim Aufladen des Energiespeichers kann die elektrische Energie auf diese Weise unmittelbar in die Speichereinheit oder in eines der Speichermodule gelangen. Bei einer modular zusammengesetzten Speichereinheit kann es bevorzugt sein, dass sich die elektrische Energie dann gleichmäßig auf die vorhandenen Speichermodule verteilt. Diese bevorzugt gleichmäßige Verteilung der elektrischen Energie kann vorzugsweise von der Elektronik im Steuerkopf des Energiespeichers gesteuert werden. Entsprechende Informationen, Daten und Steuerbefehle können vorteilhafterweise über die Schnittstellen oder die entsprechenden Daten- und Kommunikationsverbindungen ausgestaucht werden.

Es ist im Sinne der Erfindung bevorzugt, dass der mobile Energiespeicher zur Aufnahme von elektrischer Energie über Mittel umfasst, die ein induktives Laden der Speichereinheit des mobilen Energiespeichers ermöglichen. Mit anderen Worten kann der mobile Energiespeicher in einer bevorzugten Ausgestaltung der Erfindung auch ohne die Verwendung eines Netzkabels aufgeladen werden. Dazu kann der Energiespeicher beispielsweise Spulen umfassen, die ein induktives Laden der Speichereinheit oder der Speichermodule ermöglichen.

Es ist im Sinne der Erfindung bevorzugt, dass der Steuerkopf des mobilen Energiespeichers ein Bedienfeld umfasst, wobei das Bedienfeld mit der Elektronik des Steuerkopfes über eine Kommunikations- oder Datenverbindung verbunden vorliegt. Vorzugsweise kann die Kommunikationsverbindung drahtgebunden oder drahtlos ausgebildet sein. Darüber hinaus ist es im Sinne der Erfindung bevorzugt, dass der Steuerkopf des mobilen Energiespeichers eine Anzeigevorrichtung umfasst, wobei die Anzeigevorrichtung mit der Elektronik des Steuerkopfes ebenfalls über eine drahtgebundene oder drahtlose Kommunikations- oder Datenverbindung verbunden vorliegen kann.

In einem zweiten Aspekt betrifft die Erfindung ein Verfahren zum Betrieb oder Betreiben eines mobilen Energiespeichers. Die für den mobilen Energiespeicher eingeführten Begriffe, Definitionen und technischen Vorteile gelten vorzugsweise für das Betriebsverfahren für den Energiespeicher analog. Das Betriebsverfahren ist durch folgende Verfahrensschritte gekennzeichnet:
a) Bereitstellung des mobilen Energiespeichers,
b) Aufladen der Speichereinheit des mobilen Energiespeichers,
c) Abgabe von elektrischer Energie aus der Speichereinheit des mobilen Energiespeichers an Akkumulatoren und/oder Elektrogeräte umfassend Akkumulatoren mittels mindestens einer Akkuschnittstelle.

Bei dem bereitgestellten mobilen Energiespeicher kann es sich um einen mobilen Energiespeicher handeln, wie er im Kontext dieser Erfindung beschrieben wird. Es kann sich jedoch auch um einen anderen mobilen Energiespeicher handeln. Beim Aufladen kann die Speichereinheit mobilen Energiespeichers mit elektrischer Energie aufgeladen werden. Es kann aber im Sinne der Erfindung auch bevorzugt sein, dass die Speichermodule der Speichereinheit des mobilen Energiespeichers mit elektrischer Energie geladen werden. Das Aufladen erfolgt beispielsweise dadurch, dass ein Netzkabel, das Bestandteil des mobilen Energiespeichers sein kann, mit einer Steckdose bzw. einem Stromnetz verbunden wird. Es kann im Sinne der Erfindung aber auch bevorzugt sein, dass der mobile Energiespeicher mit Methoden des induktiven oder des resonanten Ladens mit elektrischer Energie aufgeladen wird. Das Aufladen der Speichermodule bzw. der Speichereinheit kann beispielsweise nachts, also insbesondere zwischen zwei Arbeitstagen, erfolgen. Dabei lädt der Anwender den mobilen Energiespeicher beispielsweise über Nacht in seinem Betrieb und nimmt ihn am nächsten Tag im geladenen Zustand wieder mit auf die Baustelle. Dort können entleerte Akkus von Elektrogeräten oder die Elektrogeräte selbst an dem mobilen Energiespeicher aufgeladen werden. Der Energiespeicher ist von der Speicherkapazität vorzugsweise so ausgelegt, dass der Anwender seinen täglichen elektrischen Energiebedarf mit der im Energiespeicher gespeicherten Energie decken kann. Die Menge der abzugebenden bzw. gespeicherten elektrischen Energie kann vorzugsweise über eine Anzahl von Speichermodulen in der Speichereinheit des mobilen Energiespeichers eingestellt werden. Mit anderen Worten: je mehr Speichermodule von dem Nutzer des mobilen Energiespeichers auf der Baustelle mitgeführt werden, desto mehr elektrische Energie steht ihm auf der Baustelle zum Aufladen von entleerten Akkus zur Verfügung.

Die Abgabe der elektrischen Energie aus der Speichereinheit des mobilen Energiespeichers erfolgt im Kontext des vorgeschlagenen Betriebsverfahrens mittels Akkuschnittstellen, die im Sinne der Erfindung auch als Ladestationen bezeichnet werden. Es ist im Sinne der Erfindung bevorzugt, dass im Steuerkopf des mobilen Energiespeichers mindestens eine Akkuschnittstelle angeordnet vorliegt, die dazu eingerichtet ist, einen Akkumulator aufzunehmen und mit elektrischer Energie aufzuladen. Der mobile Energiespeicher kann beispielsweise auch 2, 3, 4, 5 oder 6 Ladestationen umfassen, ohne darauf beschränkt zu sein. Vorzugsweise können die Akkuschnittstellen auch an einem anderen Ort als dem Steuerkopf angeordnet sein. Es können auch bei der Abgabe der elektrischen Energie aus der Speichereinheit an Akkumulatoren oder Elektrogeräte, die Akkumulatoren umfassen, Methoden des induktiven oder resonanten Ladens zum Einsatz können.

Wenn der mobile Energiespeicher einen Anschluss für einen Netzstecker eines Elektrogeräts umfasst, kann der mobile Energiespeicher auf zum Betreiben von konventionellen, netzbetriebenen Werkzeuggeräten verwendet werden, insbesondere zu ihrer Stromversorgung. In diesem Fall kann die elektrische Energie auch über einen Anschluss für einen Netzstecker eines Elektrogeräts abgegeben werden.

In einem Ausführungsbeispiel kann umfasst der vorgeschlagene mobile Energiespeicher eine Einheit aus Steuerkopf und Speichereinheit, die an einem Fahrwerk befestigt wird. Der Energiespeicher bzw. seine Speichereinheit können vorzugsweise modular ausgestaltet sein. In diesem Fall kann die Speichereinheit aus mehreren Normspeichermodulen oder Speichermodul mit definierter elektrischer Speicherkapazität zusammengesetzt sein, wobei die Speichermodule oberhalb des Fahrwerks des Energiespeichers gestapelt werden können. Der Anwender des mobilen Energiespeichers kann somit entscheiden, wieviel Energie bzw. Speichermodule er für seine tägliche Arbeit benötig. Entsprechend dieser Vorgabe kann er entsprechend viele Speichermodule in dem vorgeschlagenen mobilen Energiespeicher übereinanderstapeln und mit auf die Baustelle nehmen. Dies hat den Vorteil, dass der Energiespeicher auf die unterschiedlichen Bedürfnisse der Anwender angepasst werden kann und dass der Anwender nur so viele Speichermodule kaufen bzw. mit sich führen muss, wie er wirklich für seine Anwendungen benötigt.

In Bezug auf den Steuerkopf des Energiespeichers ist es vorstellbar, eine Anzeigevorrichtung zu integrieren, die beispielsweise als Display, Bildschirm oder Monitor ausgebildet sein kann, ohne darauf beschränkt zu sein. Die Anzeigevorrichtung kann dem Anwender beispielsweise den Ladezustand des Energiespeichers anzeigen. Auch weitere Bedienteile können am Steuerkopf angeordnet sein, wie beispielsweise ein Ein-Aus-Schalter für den Energiespeicher.

Als weitere Funktion des Batteriespeichers ist die Versorgung von konventionellen netzbetriebenen Elektrogeräten oder Werkzeuggeräten vorstellbar. Dazu kann am Steuerkopf des Energiespeichers eine Steckdose angebracht werden und in der Steuerelektronik ein Wechselrichter implementiert sein. Der Wechselrichtung ist vorzugsweise dazu eingerichtet, eine Gleichspannung im Energiespeicher auf eine Wechselspannung von beispielsweise 110 V oder 230 V zu transformieren. Somit könnten nicht nur Akkugeräte mit dem portablen Energiespeicher, sondern auch konventionelle Netzgeräte durch den vorgeschlagenen mobilen Energiespeicher mit elektrischer Energie versorgt werden.

Die Hauptvorteile der Erfindung bestehen darin, dass der Anwender des Energiespeichers auf einer Baustelle nicht auf eine vorhandene elektrische Energieversorgung angewiesen ist. Er muss dadurch auch keinen Aufwand treiben, um eine Spannungsversorgung an den jeweiligen Arbeitsort zu legen. Ferner wird der Einsatz von umweltschädlichen benzin- und/oder dieselbetriebenen Stromgeneratoren vermieden. Insbesondere kann auf eine bestehende Stromversorgung auf der Baustelle gänzlich verzichtet werden können, der der Nutzer seinen täglichen Energiebedarf direkt von zu Hause auf die Baustelle mitnehmen kann. Darüber hinaus benötigt der Anwender weniger einzelne Akkupacks bzw. Einzelakkus, da er die mitgeführten Akkus im Wechsel auf der Baustelle wieder am vorgeschlagenen Energiespeicher mit elektrischer Energie aufladen kann.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigen:
- Fig. 1: Ansicht einer bevorzugten Ausgestaltung des mobilen Energiespeichers

### Ausführungsbeispiele und Figurenbeschreibung:

Figur 1 zeigt eine bevorzugte Ausgestaltung eines vorgeschlagenen mobilen Energiespeichers 1. Auf der linken Hälfte der Fig. 1 ist eine Vorderansicht des mobilen Energiespeichers 1 dargestellt, auf der rechten Hälfte der Fig. 1 eine Seitenansicht des mobilen Energiespeichers 1. Das in Fig. 1 dargestellte bevorzugte Ausführungsbeispiel des Energiespeichers 1 umfasst ein Fahrwerk 2, eine Speichereinheit 3 und einen Steuerkopf 4. Die Speichereinheit 3 und der Steuerkopf 4 bilden eine Einheit, die auf dem Fahrwerk 2 montiert vorliegt und mit Hilfe des Fahrwerks 2 besonders einfach transportiert werden kann. Der mobile Energiespeicher 1 kann ferner einen Schubbügel (ohne Bezugszeichen, oberer Bereich Fig. 1) und einen Handgriff (ohne Bezugszeichen) im Bereich des Steuerkopfes 4 aufweisen. Es ist im Sinne der Erfindung bevorzugt, dass der Handgriff zwischen dem Bedienfeld 10 und der Anzeigevorrichtung 14 angeordnet vorliegt. Der Schubbügel kann dazu verwendet werden, den mobilen Energiespeicher 1 zu schieben oder zu ziehen. Mit dem Handgriff kann der mobile Energiespeicher 1 besonders einfach beispielsweise aus einem Kofferraum herausgenommen werden.

Das Fahrwerk 2 bildet den unteren Abschluss des mobilen Energiespeichers 1, wobei die Speichereinheit 3 und das Fahrwerk 2 über eine erste Schnittstelle 11 miteinander verbunden sind. Die Schnittstellen 11, 12, 13 gewährleisten insbesondere die mechanische und/oder elektrische Verbindung zwischen den Komponenten des Energiespeichers 1, die mit den Schnittstellen 11, 12, 13 miteinander verbunden werden sollen. Die erste Schnittstelle 11 ist vorzugsweise dazu eingerichtet, eine elektrisch leitende Verbindung zwischen Speichereinheit 3 und Fahrwerk 2 des mobilen Energiespeichers 1 herzustellen. Außerdem ermöglicht die erste Schnittstelle 11 die mechanische Verbindung von Speichereinheit 3 und Fahrwerk 2. Oberhalb des Fahrwerks 2 liegt vorzugsweise die Speichereinheit 3 vor, die mindestens ein Speichermodul 7 umfasst. Vorzugsweise stellt die Speichereinheit 3 eine modulare Speichereinheit 3 dar, die aus mehreren Speichermodulen 7 zusammengesetzt werden kann. In den Speichermodulen 7 kann elektrische Energie gespeichert werden. Diese Energie kann durch einen Aufladevorgang des mobilen Energiespeichers 1 in die Speichermodule 7 bzw. in die Speichereinheit 3 gelangen. Zum Zwecke des Aufladens kann der mobile Energiespeicher 1 über ein Netzkabel 9 mit einem Stromnetzt verbunden werden. Dies kann beispielsweise nachts oder zwischen zwei Arbeitseinsätzen des mobilen Energiespeichers 1 erfolgen. In einer nicht abgebildeten Ausgestaltung der Erfindung kann der mobile Energiespeicher 1 auch Mittel zum induktiven oder resonanten Laden der Speichermodule 7 bzw. der Speichereinheit 3 umfassen.

Die Speichermodule 7 sind untereinander mit dritten Schnittstellen 13 verbunden. Auch diese dritten Schnittstellen 13 können mechanisch und/oder elektrisch ausgebildet sein, d.h. eine mechanische und/oder eine elektrisch leitende Verbindung zwischen den einzelnen Speichermodulen 7 herstellen. Oberhalb der Speichereinheit 3, insbesondere oberhalb des obersten Speichermoduls 7, liegt der Steuerkopf 4 des mobilen Energiespeichers 1 angeordnet vor. Die Verbindung zwischen Steuerkopf 4 und Speichereinheit 3 wird von einer zweiten Schnittstelle 12 hergestellt, die - wie die anderen Schnittstellen 11 und 13 auch - elektrisch und/oder mechanisch ausgebildet sein kann. An den Seiten des mobilen Energiespeichers 1 können zusätzlich Klammern vorgesehen sein, die dazu beitragen, dass eine robuste mechanische Verbindung zwischen dem Fahrwerk 2, der Speichereinheit 3, dem Steuerkopf 4 und den einzelnen Speichermodulen 7 besteht. Diese Befestigungsklammern sind in der Seitenansicht in Fig. 1 (rechte Bildhälfte) als schwarze Rechtecke abgebildet.

Der Steuerkopf 4 umfasst verschiedene Funktionseinheiten des mobilen Energiespeichers 1. Beispielsweise umfasst der Steuerkopf 4 eine Elektronik 5, die eine Steuerung des mobilen Energiespeichers 1 ermöglicht. Insbesondere ist die Elektronik 5 dafür vorgesehen, das Aufladen des mobilen Energiespeichers 1 zu überwachen und zu steuern, sowie die Abgabe der zunächst in dem Energiespeicher 1 gespeicherten Energie an entsprechende Verbraucher. Die Elektronik 5 des mobilen Energiespeichers 1 kann beispielsweise festlegen, ob alle Speichermodule 7 der Speichereinheit 3 gleichmäßig entladen werden, d.h. in gleichem Maße an der Abgabe der elektrischen Energie an die Akkus in den Akkuschnittstellen 6 mitwirken, oder ob die Speichermodule 7 beispielsweise nacheinander im Wesentlichen vollständig geleert werden. Die Elektronik 5 des mobilen Energiespeichers 1 kann dies von internen Betriebszuständen des Energiespeichers 1 oder seiner Komponenten abhängig machen oder beispielsweise auch von Umgebungseinflüssen, wie Luftfeuchtigkeit oder der Temperatur. Beispielsweise kann die Elektronik 5 des mobilen Energiespeichers 1 dazu eingerichtet sein, zu erkennen, was für eine Akku in der Ladestation 6 des Energiespeichers 1 geladen werden soll und die Energieabgabe an diese Information anpassen. Für diese Zwecke kann der Energiespeicher 1 über eine entsprechende Sensorik und Auswertemittel verfügen, wobei die Auswertemittel beispielsweise auch in den Steuerkopf 4 bzw. der Elektronik 5 des Energiespeichers 1 vorliegen können. Es kann im Sinne der Erfindung auch bevorzugt sein, dass der Nutzer Informationen bezüglich der zu ladenden Akkus über ein Bedienfeld 10 im Steuerkopf 4 des mobilen Energiespeichers 1 eingibt.

Zur Abgabe der Energie umfasst der mobile Energiespeicher 1 Akkuschnittstellen 6, die im Sinne der Erfindung auch als Ladestationen 6 bezeichnet werden. Die Ladestationen 6 sind dazu eingerichtet, Akkumulatoren von Elektro- oder Werkzeuggeräten aufzunehmen und mit elektrischer Energie aufzuladen. Die Akkumulatoren können dabei noch in den Elektro- oder Werkzeuggeräten eingebaut sein oder von ihnen getrennt vorliegen. Beispielsweise kann ein erster Akku mit Hilfe des mobilen Energiespeichers 1 geladen werden, während ein zweiter Akku verwendet wird, um mit einem Werkzeuggerät zu arbeiten. Sobald der zweite Akku leer ist, kann dieser zweite Akku mit Hilfe des mobilen Energiespeichers 1 geladen werden und der erste Acku kann zum Betrieb eines Elektrogeräts verwendet werden. Der mobile Energiespeicher 1 kann mehrere Ladestationen 6 umfassen, beispielsweise 1 bis 8, 2 bis 6 oder 3 bis 5 Ladestationen.

Ferner kann der Steuerkopf 4 des mobilen Energiespeichers 1 ein Bedienfeld 10 und/oder eine Anzeigevorrichtung 14 umfassen. Mit dem Bedienfeld 10 kann der mobile Energiespeicher 1 von einem Nutzer ein- oder ausgeschaltet werden. Ferner können Auflade- oder Energieabgabevorgänge gestartet, abgebrochen oder beendet werden. Das Bedienfeld 10 kann beispielsweise eine Bedienoberfläche umfassen oder als Touch-Bildschirm ausgestaltet sein. Es kann im Sinne der Erfindung auch bevorzugt sein, dass das Bedienfeld 10 Schalter, Knöpfe und/oder Taster umfasst. Die Anzeigevorrichtung 14 kann beispielsweise als Display, Bildschirm oder Monitor ausgebildet sein. Auf der Anzeigevorrichtung 14 können Ladezustände der einzelnen Akkumulatoren in den Ladestationen 6 angezeigt werden oder Ladezustände der einzelnen Speichermodule 7 der Speichereinheit 3.

Mit dem vorgeschlagenen mobilen Energiespeicher 1 können nicht nur Akkus und Elektrogeräte mit mindestens einem Akku mit elektrischer Energie aufgeladen werden. Wenn der Energiespeicher 1 in einer bevorzugten Ausgestaltung der Erfindung über einen Anschluss 8 für einen Netzstecker eines Elektrogeräts verfügt, können mit dem Energiespeicher 1 auch solche Elektrogeräte oder Werkzeuggeräte, die für einen Netzbetrieb konzipiert sind, mit elektrischer Energie versorgt werden. Solche für einen Netzbetrieb konzipierten Elektrogeräte oder Werkzeuggeräte werden im Sinne der Erfindung als konventionelle Elektrogeräte oder Werkzeuggeräte bezeichnet. Der Stecker solcher Elektrogeräte oder Werkzeuggeräte kann in den Anschluss 8 für einen Netzstecker eines Elektrogeräts eingeführt werden, so dass das Elektrogerät über diese elektrisch leitende Verbindung mit Strom versorgt wird und auf diese Weise betrieben werden kann. Beispielsweise können Staubsauger, Wassermanagement- oder andere Unterstützungsgeräte auf diese Weise mit elektrischer Energie versorgt werden.

Das Fahrwerk 2 des mobilen Energiespeichers 1 umfasst vorzugsweise jeweils zwei Räder 15 und zwei Lenkrollen 16, die jeweils paarweise auf gegenüberliegenden Seiten des Energiespeichers 1 angeordnet sind. Beispielsweise können die Lenkrollen 16 auf einer Vorderseite des Energiespeichers 1 angeordnet vorliegen, während die Räder oder Rollen 15 auf der Rückseite des Energiespeichers 1 angeordnet vorliegen. Die Räder 15 können mit einer Achse miteinander verbunden sein. An der Rückseite des Energiespeichers 1 befindet sich vorzugsweise auch der Schubbügel des Energiespeichers 1. Ein Handgriff kann vorzugsweise auf der Oberseite des Steuerkopfes 4 angeordnet sein (siehe Seitenansicht der Erfindung, rechte Bildhälfte Fig. 1).

In einer bevorzugten Ausgestaltung der Erfindung kann das Fahrwerk 2 des Energiespeichers 1 einen Antrieb mit einem Motor umfassen (beide ohne Bezugszeichen), wobei der Motor seine Antriebsenergie aus der Speichereinheit 3 des mobilen Energiespeichers 1 bezieht. Auf diese Weise kann der Nutzer des Energiespeichers 1 beim Transport des Energiespeichers 1 erheblich unterstützt werden und der Energiespeicher 1 kann vorteilhafterweise auch in besonders unwegbaren Gelände eingesetzt werden.

### Bezugszeichenliste

- 1: mobiler Energiespeicher
- 2: Fahrwerk
- 3: Speichereinheit
- 4: Steuerkopf
- 5: Elektronik
- 6: Akkuschnittstellen oder Ladestationen
- 7: Speichermodule
- 8: Anschluss für einen Netzstecker eines Elektrogeräts
- 9: Netzkabel zur Verbindung des mobilen Energiespeichers mit einem Energienetz
- 10: Bedienfeld
- 11: erste Schnittstelle
- 12: zweite Schnittstelle
- 13: dritte Schnittstelle
- 14: Anzeigevorrichtung
- 15: Räder
- 16: Lenkrollen

## Patentansprüche

1. Mobiler Energiespeicher (1) zur Abgabe von elektrischer Energie,
**dadurch gekennzeichnet, dass**
der mobile Energiespeicher (1) ein Fahrwerk (2) zum Transport des mobilen Energiespeichers (1) umfasst, wobei das Fahrwerk (2) mit einer Speichereinheit (3) verbunden ist, wobei die Speichereinheit (3) mit einem Steuerkopf (4) verbunden ist, wobei der Steuerkopf (4) eine Elektronik (5) zur Steuerung der Abgabe der elektrischen Energie umfasst, wobei der mobile Energiespeicher (1) eine Reihe von Akkuschnittstellen (6) zur Abgabe der elektrischen Energie an Akkumulatoren und/oder Elektrogeräte umfassend Akkumulatoren aufweist.

2. Mobiler Energiespeicher (1) nach Anspruch 1
**dadurch gekennzeichnet, dass**
die Speichereinheit (3) ein oder mehrere Speichermodule (7) aufweist, wobei die Speichermodule (7) untereinander mit jeweils einer dritten Schnittstelle (13) verbunden sind.

3. Mobiler Energiespeicher (1) nach Anspruch 1 oder 2
**dadurch gekennzeichnet, dass**
der mobile Energiespeicher (1) ferner mindestens einen Anschluss (8) für einen Netzstecker eines Elektrogeräts umfasst.

4. Mobiler Energiespeicher (1) nach einem der vorherigen Ansprüche
**dadurch gekennzeichnet, dass**
der mobile Energiespeicher (1) zur Aufnahme von elektrischer Energie ein Netzkabel (9) zur Verbindung des mobilen Energiespeichers (1) mit einem Energienetz umfasst.

5. Mobiler Energiespeicher (1) nach einem der Ansprüche 1 bis 3
**dadurch gekennzeichnet, dass**
der mobile Energiespeicher (1) zur Aufnahme von elektrischer Energie Mittel umfasst, die ein induktives Laden der Speichereinheit (3) des mobilen Energiespeichers (1) ermöglichen.

6. Mobiler Energiespeicher (1) nach einem der vorherigen Ansprüche
**dadurch gekennzeichnet, dass**
die Elektronik (5) des Steuerkopfes (4) zur Steuerung der Abgabe der elektrischen Energie mit den Akkuschnittstellen (6) über eine Kommunikationsverbindung verbunden vorliegt, wobei die Kommunikationsverbindung drahtgebunden oder drahtlos ausgebildet ist.

7. Mobiler Energiespeicher (1) nach einem der vorherigen Ansprüche
**dadurch gekennzeichnet, dass**
die Schnittstellen (11, 12, 13) elektrische und/oder mechanische Schnittstellen sind.

8. Mobiler Energiespeicher (1) nach einem der vorherigen Ansprüche
**dadurch gekennzeichnet, dass**
der Steuerkopf (4) des mobilen Energiespeichers (1) ein Bedienfeld (10) umfasst, wobei das Bedienfeld (10) mit der Elektronik (5) des Steuerkopfes (4) über eine Kommunikationsverbindung verbunden vorliegt, und/oder
der Steuerkopf (4) des mobilen Energiespeichers (1) eine Anzeigevorrichtung (14) umfasst, wobei die Anzeigevorrichtung (14) mit der Elektronik (5) des Steuerkopfes (4) über eine Kommunikationsverbindung verbunden vorliegt,
wobei die Kommunikationsverbindungen drahtgebunden oder drahtlos ausgebildet sind.

9. Mobiler Energiespeicher (1) nach einem der vorherigen Ansprüche
**dadurch gekennzeichnet, dass**
das Fahrwerk (2) des mobilen Energiespeichers (1) über eine erste Schnittstelle (11) mit der Speichereinheit (3) verbunden ist und die Speichereinheit (3) des mobilen Energiespeichers (1) über eine zweite Schnittstelle (12) mit dem Steuerkopf (4) verbunden ist.

10. Mobiler Energiespeicher (1) nach einem der vorherigen Ansprüche
**dadurch gekennzeichnet, dass**
das Fahrwerk (2) einen Antrieb mit einem Motor umfasst, wobei der Motor seine Antriebsenergie aus der Speichereinheit (3) des mobilen Energiespeichers (1) bezieht.

11. Mobiler Energiespeicher (1) nach einem der vorherigen Ansprüche
**dadurch gekennzeichnet, dass**
das Fahrwerk (2) des mobilen Energiespeichers (1) Räder (15) umfasst, die mit einer Achse verbindbar sind.

12. Mobiler Energiespeicher (1) nach einem der vorherigen Ansprüche
**dadurch gekennzeichnet, dass**
das Fahrwerk (2) des mobilen Energiespeichers (1) Lenkrollen (16) umfasst.

13. Verfahren zum Betrieb eines mobilen Energiespeichers (1) nach einem der vorhergehenden Ansprüche **gekennzeichnet durch die folgenden Verfahrensschritte:**
a) Bereitstellung des mobilen Energiespeichers (1),
b) Aufladen der Speichereinheit (3) des mobilen Energiespeichers (1),
c) Abgabe von elektrischer Energie aus der Speichereinheit (3) des mobilen Energiespeichers (1) an Akkumulatoren und/oder Elektrogeräte umfassend Akkumulatoren mittels mindestens einer Akkuschnittstelle (6).

14. Verfahren nach Anspruch 13,
**dadurch gekennzeichnet, dass**
eine Menge der abzugebenden elektrischen Energie über eine Anzahl von Speichermodulen (7) in der Speichereinheit (3) des mobilen Energiespeichers (1) einstellbar ist.

15. Verfahren nach Anspruch 13 oder 14
**dadurch gekennzeichnet, dass**
die elektrische Energie auch über einen Anschluss (8) für einen Netzstecker eines Elektrogeräts abgegeben wird.
